Europäisches Patentamt

European Patent Office

Office européen des brevets

(19)

(11) Publication number: **0 332 312**
**A1**

(12) **EUROPEAN PATENT APPLICATION**

(21) Application number: **89301595.8**

(51) Int. Cl.⁴: **H04N 3/12**

(22) Date of filing: **20.02.89**

(30) Priority: **27.02.88 GB 8804650**

(43) Date of publication of application:
**13.09.89 Bulletin 89/37**

(84) Designated Contracting States:
**AT BE CH DE ES FR IT LI LU NL SE**

(71) Applicant: **STC PLC**
**10, Maltravers Street**
**London, WC2R 3HA(GB)**

(72) Inventor: **Ross, Peter William**
**40, Rainsford Road**
**Stansted Essex. CM24 8EA(GB)**

(74) Representative: **Laurence, Simon French et al**
**STC Patents West Road**
**Harlow Essex CM20 2SH(GB)**

(54) **Display device.**

(57) A grey scale facility for co-ordinate addressed bistable ferroelectric liquid crystal cell is provided by a cycle of refreshings within the persistence of vision time these refreshings being arranged so that the brightest pixels are turned on soonest and remain on longest while progressively less bright pixels are turned on at progressively later stages in the cycle and hence remain on for progressively shorter periods. The strength of illumination is modulated in synchronism with the cyclic addressing of the cell.

EP 0 332 312 A1

## DISPLAY DEVICE

This invention relates to the provision of a grey-scale rendering facility for a fast switching display such as a ferroelectric liquid crystal display.

A particularly useful characteristic of ferroelectric liquid crystal display cells is that they can be switched much faster than conventional non-ferroelectric liquid crystal display cells such as twisted nematic cells. Ferroelectric liquid crystal cells can be constructed which are also readily operable in a bistable manner in which any pixel is maintainable indefinitely in either one of two states by a sustaining field. This feature allows multiplexing of a co-ordinate addressed pixel matrix with a large number of lines. The two stable states are rendered optically distinct by the use of an appropriate system of polarisation sensitive elements that optionally may include the use of a pleochroic guest dye dispersed in the ferroelectric material as one of those elements. The bistability of such a cell makes it a relatively simple matter to create black and white displays without any grey scale (halftones), but the generation of such grey scale tones from such a system that exhibits bistability is more complicated.

One method for achieving such a grey scale is described in GB 2,164,776A. A cycle of repeated addressings of the pixels is used by means of which it is arranged that the pixels that are required to be the brightest are maintained in an ON state the longest within any given cycle, while less bright pixels are turned ON for shorter durations. The required brightness for each pixel is stored as a binary number. On the first addressing of a cycle, the pixels are set in accordance with the least significant digit of their respective brightness numbers, and on each succeeding addressing of the cycle. they are set in accordance with the digit of next greater significance. In order to take account of the greater weight to be associated with the digits of greater significance, the time interval elapsing between consecutive addressings of a cycle is doubled with each successive addressing of that cycle.

To achieve a wide range of possible brightness values requires a correspondingly wide range between the longest and shortest times within a single cycle that a pixel can be maintained in its ON state. The available range is limited on the one hand by the need to keep the cycle time short enough for persistence of vision effects to prevent the perception of too much flicker, and on the other hand by the speed limitations imposed both by the electrical time constants of the drive circuitry and speed of response of the liquid crystal.

This invention is directed to providing an enhancement of this range by arranging to light the cell in a manner that involves ramping or stepping the intensity of the illumination with a periodicity and phase matched with the cycles of repeated addressings of the pixels.

According to the present invention there is provided a method of providing a grey-scale rendering facility using a co-ordinate addressed display panel of pixels switchable between a dark appearance state and a light appearance state, characterised in that the panel is lit with means providing an intensity of illumination that varies in a periodic manner with a fundamental period that lies within the persistence of vision time, and in that, synchronised with that period, each pixel is addressed with a cycle of addressings.

The invention also resides in a display device capable of providing a grey-scale rendering facility which display device includes a co-ordinate addressed panel of pixels means for illuminating the panel and means for addressing the pixel, wherein the pixels are switchable between a dark appearance state and a light appearance state, characterised in that the means for illuminating the panel is adapted to vary the intensity of illumination in a periodic manner with a fundamental period that lies within the persistence of vision time, and in that the addressing means is adapted to address the pixels with a cycle of addressings which cycle is sunchronised with the fundamental period of said variation of the intensity of illumination.

There follows a description of a method of generating a grey-scale rendering facility in a liquid crystal display embodying the invention in a preferred form. The description refers to the accompanying drawings in which:

Figure 1 is a schematic representation of the components of the display, and

Figure 2 depicts liquid crystal cell drive waveforms for the display of Figure 1, and

Figure 3 depicts optical intensity drive waveforms for the optical source of the display of Figure 1.

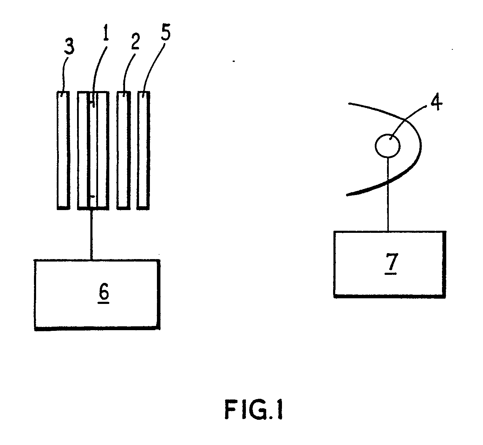

Referring to Figure 1, a preferred form of liquid crystal display cell 1 for use in this application is a co-ordinate addressed ferroelectric transmission type cell. Such a cell exhibits bistability of operation.

A pixel can be set into either one of two optically distinct states using addressing pulses of appropriate format such that the pixel will not be permanently disturbed from that state by the addressing of other pixels. Polarisers 2 and 3 are arranged in front of and behind the cell 1 so that in one of these states the combination is light blocking, while in the other state it is substantially transparent. The cell is illuminated from the rear by an optical source 4. A diffuser 5 may be included to give an improved viewing angle. The liquid crystal cell is powered from drive circuitry 6 and the source 4 from a power supply 7.

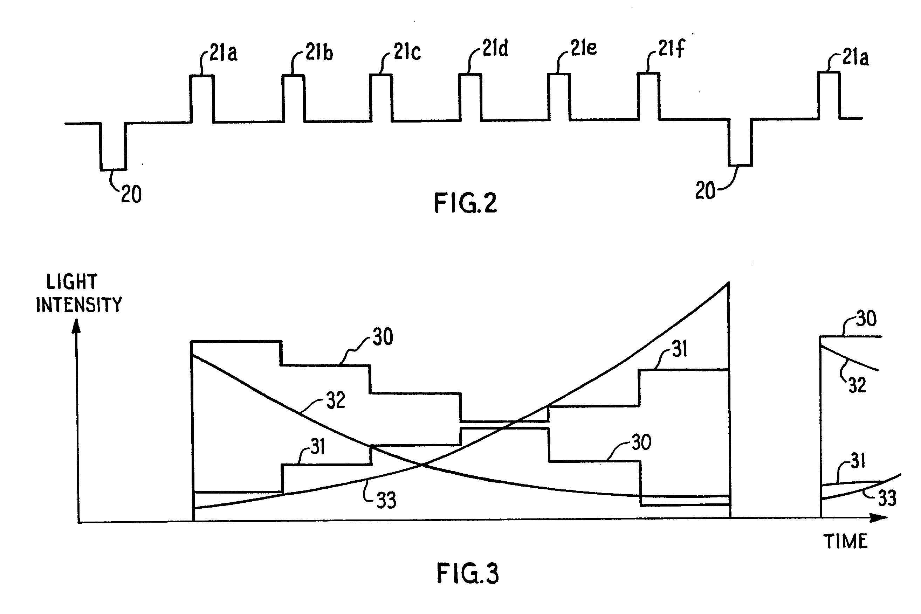

Referring now to Figure 2, at the beginning of each cycle of refreshings all the pixels of the display are put into the light blocking state by a page blanking waveform symbolised by pulse 20, and then at each refreshing of the cycle pixels are able to be set into their transmissive state by means of waveforms symbolised by pulses 21a to 21f. Pixels to be rendered with the greatest brightness are driven into their transmissive state by waveforms symbolised by pulse 21a, and so remain in their transmissive state for the whole of the duration from pulse 21a to the beginning of the next cycle when all pixels are set back into their light blocking state by its page blanking pulse 20. For the next highest brightness pixels waveforms symbolised by pulse 21b are employed, and so these pixels are in their transmissive state for a slightly shorter period than the pixels addressed with waveforms symbolised by pulse 21a. The refreshing cycle time is arranged to be short enough to lie within the persistence of vision time, and hence pixels set into their transmissive states for the longest period appear brightest, while those set into their transmissive state for progressively shorter periods appear progressively less bright. The number of levels in the grey-scale is determined by the number of refreshings per cycle. Figure 2, by way of illustration only, employs six refreshing pulses 21a to 21f between consecutive page blanking pulses 20, and so provides five levels of grey between deep black and peak brightness.

The pulses 21a and 21f are most conveniently spaced at regular intervals. To give a greater dynamic range to the grey-scale levels than would result were the illumination provided by a source 4 kept constant, the intensity of the light output of source 4 is instead modulated in synchronism with the refreshing cycle employed to address the liquid crystal cell. Thus the intensity can be reduced in steps synchronised with the pulses 21 as depicted by trace 30 of Figure 3, or increased in steps as depicted by trace 31.
Alternatively the intensity can be altered smoothly as depicted for instance by traces 32 and 33.

## Claims

1. A method of providing a grey-scale rendering facility using a co-ordinate addressed display panel of pixels switchable between a dark appearance state and a light appearance state, characterised in that the panel is lit with means providing an intensity of illumination that varies in a periodic manner with a fundamental period that lies within the persistence of vision time, and in that, synchronised with that period, each pixel is addressed with a cycle of addressings.

2. A method as claimed in claim 1, wherein within each fundamental period the intensity of illumination is stepped in magnitude at each successive addressing of the cycle of addressings.

3. A display device capable of providing a grey-scale rendering facility which display device includes a co-ordinate addressed panel of pixels means for illuminating the panel and means for addressing the pixel, wherein the pixels are switchable between a dark appearance state and a light appearance state, characterised in that the means for illuminating the panel is adapted to vary the intensity of illumination in a periodic manner with a fundamental period that lies within the persistence of vision time, and in that the addressing means is adapted to address the pixels with a cycle of addressings which cycle is synchronised with the fundamental period of said variation of the intensity of illumination.

4. A display display as claimed in claim 3, wherein the means for illuminating the panel is adapted to step the intensity of illumination at each successive addressing of a cycle of addressings generated by the addressing means.

5. A display device as claimed in claim 3 or 4, wherein the co-ordinate addressed panel of pixels is a co-ordinate addressed ferroelectric liquid crystal cell.

FIG.1

EP 0 332 312 A1

21a  21b  21c  21d  21e  21f  21a

20  20

**FIG.2**

LIGHT
INTENSITY

30

32

31

31

33

30

31

32

30

31

33

TIME

**FIG.3**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 569 294 (CANON)<br>* Page 11, line 28 - page 12, line 30 * | 1,3 | H 04 N 3/12 |
| A | GB-A-2 186 414 (SEIKO EPSON)<br>* Page 2, lines 5-48; figure 12 * | 1,3 | |
| A | WO-A-8 404 641 (KING)<br>* Page 1, lines 23-33 * | 1,3 | |

TECHNICAL FIELDS SEARCHED (Int. Cl.4)

H 04 N
G 09 G

The present search report has been drawn up for all claims

| Place of search | Date of completion of the search | Examiner |
|---|---|---|
| THE HAGUE | 14-06-1989 | BEQUET T.P. |

EPO FORM 1503 03.82 (P0401)